**Europäisches Patentamt**

**European Patent Office**

**Office européen des brevets**

(19)

(11) Veröffentlichungsnummer : **0 105 954**
**B1**

(12)

# EUROPÄISCHE PATENTSCHRIFT

(45) Veröffentlichungstag der Patentschrift :
**28.05.86**

(21) Anmeldenummer : **82109442.2**

(22) Anmeldetag : **13.10.82**

(51) Int. Cl.⁴ : **B 65 G 17/06**, B 65 G 21/22,
B 65 G 37/00

(54) **Förderband, insbesondere für die Verwendung in Verpackungsanlagen.**

(43) Veröffentlichungstag der Anmeldung :
**25.04.84 Patentblatt 84/17**

(45) Bekanntmachung des Hinweises auf die Patenterteilung : **28.05.86 Patentblatt 86/22**

(84) Benannte Vertragsstaaten :
**AT BE CH DE FR GB IT LI LU NL SE**

(56) Entgegenhaltungen :
**DE-A- 2 543 707**
**US-A- 2 954 113**
**US-A- 2 987 168**

(73) Patentinhaber : **ROVEMA Verpackungsmaschinen**
**GmbH & Co. KG**
**Postfach 20**
**D-6301 Fernwald (DE)**

(72) Erfinder : **Schmitt, Reinhold**
**Chamissoweg 12**
**D-6300 Giessen-Wieseck (DE)**
Erfinder : **Herbert, Manfred**
**Hainstrasse 10**
**D-6301 Biebertal 1 (DE)**
Erfinder : **Baur, Walter, Dr.**
**Herzbergstrasse 37/39**
**D-6466 Gründau 1 (DE)**

(74) Vertreter : **Schlee, Richard, Dipl.-Ing. et al**
**Patentanwälte Dipl.-Ing. R. Schlee Dipl.-Ing. A. Mis-**
**sling Bismarckstrasse 43**
**D-6300 Lahn-Giessen 1 (DE)**

**EP 0 105 954 B1**

## Beschreibung

Die Erfindung bezieht sich auf ein Förderband, insbesondere für die Verwendung in Verpackungsanlagen, z. B. für die Förderung flexibler Beutel in einer Kartoniermaschine, mit wenigstens zwei parallel angeordneten Zugelementen in Form von Rollenketten aus Stahl, die über Kettenräder geführt sind und mit an den Ketten geführten Tragelementen, die ebene Auflageflächen für zu fördernde Gegenstände bilden, wobei jedes Tragelement an zwei mit Kettengelenken zusammenfallenden Gelenkachsen mit den Ketten verbunden ist und jede Gelenkachse zugleich Gelenkachse für ein benachbartes Tragelement ist und wobei benachbarte Tragelemente einander überlappen und in den Überlappungsbereichen die untergreifenden Teile Zylinderflächen aufweisen, deren Achsen mit der den benachbarten Tragelementen gemeinsamen Gelenkachse zusammenfällt und die übergreifenden Teile keinen oder nur einen geringen Abstand von der Zylinderfläche haben und wobei die ebenen Auflageflächen stufenlos an die Zylinderflächen anschließen (US-A-2 987 168).

Förderbänder dieser Art haben den Vorteil, daß in jedem Abschnitt des Bandes eine geschlossene Oberfläche besteht, so daß bei beliebiger Verlegung des Förderbandes auch flexible Beutel gefördert werden können, ohne daß die Gefahr besteht, daß die Beutel in Schlitze eingeklemmt und dort beschädigt werden. Bei einem bekannten Förderband der eingangs genannten Art (US-A-2 987 168) sind die Rollenketten seitlich von den Tragelementen angeordnet und die Rollen sind auf Schienen geführt, die von Gestellplatten abragen, die im Abstand von den seitlichen Rändern der Tragelemente angeordnet sind. Das bekannte Förderband ist frei von Mitnehmeransätzen, so daß eine genaue Plazierung von Fördergut, wie z. B. flexiblen Beuteln, nicht möglich ist.

Bekannt ist auch ein Förderband (US-A-2 954 113), das ein einziges Zugelement in Form einer Rollenkette aufweist, die unterhalb von Tragelementen angeordnet ist. Die Tragelemente überlappen sich so, daß zwar in geraden Bereichen des Förderbandes eine zusammenhängende Auflagefläche besteht, nicht jedoch im Bereich von konvexen Bandabschnitten. Die Auflagefläche ist frei von Mitnehmern. Da die einzige Rollenkette die Tragelemente gegen Kippbewegungen nach der Seite hin nicht genügend sicher halten kann, sind seitliche Auflageflächen vorgesehen, auf denen die Tragelemente gleiten.

Bei der Förderung von flexiblen Verpackungsbeuteln ist es oft notwendig, die Beutel zu formen, damit sie ohne Schwierigkeiten in eine enge Umverpackung, z. B. einen Karton, eingeschoben werden Können. Um dies zu erreichen, wurde bereits ein Förderband konstruiert (DE-A-25 43 707), bei dem Fächer für Beutel aus zwei L-förmigen Teilen gebildet werden, die an verschiedenen Teilbändern, nämlich eine, Unterband und eine, Oberband, befestigt sind und die relativ zueinander so bewegt werden, daß sue deb Aufnahmeraum für den Beutel zunehmend verengen. Eine solche Konstruktion erfordert einen erhebliche Bauaufwand.

Wenn Förderbänder dazu verwendet werden sollen, Verpackungseinheiten, z. B. flexible Beutel, in einer Übergabestation genau auf Verpackungskartons auszurichten, ist es erforderlich, am Förderband Fächer vorzusehen, in denen die Beutel fixiert werden. Um das Förderband an verschiedene Verpackungsgrößen anpassen zu können, sollte die Breite der Fächer verstellt werden können. Damit an einer Abgabestation Spalte seitlich des Förderbandes möglichst vermieden werden, sollten sich seitlich der Auflagefläche des Förderbandes keine Bauteile des Förderbandes befinden.

Um diesen Forderungen entsprechen zu können, liegt der Erfindung die Aufgabe zugrunde, ein Förderband der eingangs genannten Art so auszubilden, daß sich seitlich der Auflageflächekeine Bauteile des Förderbandes befinden und daß das Förderband Fächer für die Aufnahme von Fördergut aufweist, wobei sämtliche Fächer des Bandes mit einer einzigen Verstellung auf eine gewünschte Breite einstellbar sein sollen.

Diese Aufgabe wird nach der Erfindung dadurch gelöst, daß die Ketten unterhalb der Tragelemente und innerhalb der Seitenkanten derselben angeordnet sind, und daß parallel zu dem Förderband ein weiteres Förderband vorgesehen ist, wobei die benachbarten Seitenkanten der Förderbänder nahe beieinanderliegen und an jedem Förderband Fachwände angeordnet sind, die auch das benachbarte Förderband übergreifen und zwei Fachwände, von denen eine an einem Förderband und die andere am anderen Förderband befestigt ist, ein Fach bilden und zur Verstellung der Fachbreite die Teilbänder relativ zueinander verstellbar sind.

Durch die Anordnung der Ketten innerhalb der Seitenkanten der Tragelemente werden seitlich über die Auflagefläche vorragende Bauteile vermieden. Dies ermöglicht es auch, die beiden parallelen Förderbänder nahe beieinander anzuordnen, wordurch ein schädlicher Spalt in der Auflagefläche vermieden wird. Der Abstand zwischen zwei ein Fach bildenden Fachwänden ist für alle Fächer mit einer einzigen Verstellung dadurch möglich, daß eine Relativverschiebung zwischen den Teilbändern erfolgt, wonach die Verschiebelage fixiert wird. Das erfindungsgemäße Förderband ist insbesondere für den exakten Transport von Verpackungsbeuteln in eine Übergabestation geeignet, in der die Verpackungsbeutel in Kartons eingeschoben werden. Da jedes der Teilbänder wenigstens zwei stabile Zugelemente in Form von Ketten aufweist, kann das Band mit großer Länge hergestellt werden, so daß es gut für Anlagen geeignet ist, die mehrere Abfüllmaschinen, z. B. Schlauchbeutelmaschinen, aufweisen, von denen aus gefüllte Verpackungsbeutel zu einer Kartonierstation gebracht werden sollen.

Die Fixierung der Tragelemente an den Ketten mittels Kettenschlössern (Anspruch 2) erleichtert das Auswechseln defekter Tragelemente oder defekter kettenglieder. Verwendet werden können hierbei übliche Kettenschlösser mit U-förmiger Feder (Anspruch 3).

Besonders wirtschaftlich ist die Verwendung von Duplexketten (Anspruch 4). Duplexketten sind im Handel erhältliche und dadurch preiswerte Ketten, die mit den Maßnahmen des Anspruches 4 für die Zwecke der Erfindung nutzbar sind. Eine Besonders günstige räumliche Anordnung ergibt sich, wenn die Tragelemente an den Außenseiten der Ketten befestigt sind (Anspruch 5).

Die Tragelemente haben vorteilhafterweise eine Form gemäß Anspruch 7. Bei einer solchen Form lassen sich große Breiten auch bei geringem Kettenabstand verwirklichen. Auch erhält man gerade Seitenkanten des Förderbandes, vermeidet also dort Stufen.

Die übergreifenden Teile an den Überlappungsstellen sind vorzugsweise hohlzylindrische Flächen (Anspruch 8). Dies ist jedoch nicht zwingend nötig ; die übergreifenden Teile nämlich können auch nur schmale Leisten aufweisen, die mit den Zylinderflächen der untergreifenden Teile zwecks Abdichtung zusammenwirken. Hinter diesen Dichtleisten kann eine Unterschneidung der übergreifenden Teile vorhanden sein.

Die Tragelemente sind gemäß Anspruch 9 vorzugsweise einstükkige Kunststoff-Spritzteile. Solche Spritzteile lassen sich billig herstellen. Für ein Förderband werden sehr viele Tragelemente benötigt, so daß sich das genannte Herstellungsverfahren besonders gut eignet. Ein gut geeigneter Kunststoff ist z. B. Polycarbonat. In den Ansprüchen 10 bis 13 sind vorteilhafte Ausgestaltungsmerkmale betreffend die Führung des Förderbandes angegeben. Kunststoffleisten gemäß Anspruch 10 haben den Vorteil, daß bei großer Verschleißfestigkeit ein geräuscharmer Lauf des Förderbandes erreicht wird. Wenn die Führungsleisten gemäß Anspruch 11 mit Kettenrollen zusammenwirken, erhält man eine besonders geringe Reibung. An konkaven Stellen der Förderbahn oder auch an vertikalen Stellen werden gemäß Anspruch 12 Führungskulissen angeordnet, wobei die Führungswände der kulissen vorzugsweise wieder mit Kettenrollen zusammenwirken, wodurch die Reibungsverluste in Grenzen gehalten werden.

Mit der Weiterbildung gemäß Anspruch 13 wird erreicht, daß sich das Förderband beim Ablaufen von einem Kettenrad sofort von diesem löst. Damit wird der Nachteil vermieden, daß beim Ablaufen Klemmungen entstehen und die Auflagefläche des Förderbandes uneben wird.

Die Fachwände können auch obere Ausschnitte für den Eingriff von Gabelzinken aufweisen, auf die Fördergut aufgelegt werden kann, das dann von der Fachwand abgestreift wird. Auch können die Fachwände leistenförmige Erhebungen aufweisen, die sich horizontal erstrecken und so eine mehr linienförmige Berührung mit dem Fördergut ergeben.

Gemäß den Ansprüchen 14 und 15 wird die Möglichkeit, das Förderband auch konvex und konkav verlaufen lassen zu können, zur Formung von Fördergut, z. B. flexiblen Beuteln, ausgenutzt. Bei konvexem Verlauf des Förderbandes werden benachbarte Fachwände so verlagert, daß sie nach unten konvergieren, was für das Einwerfen von Beuteln günstig ist. Gemäß Anspruch 15 werden die Fachwände so verlagert, daß sich die Fachwände zueinander hin neigen, wodurch das Verpackungsgut seitlich zusammengeschoben wird.

Das Förderband eignet sich auch gut für eine Anordnung aus Unterband und Oberband, zwischen denen Verpackungsbeutel hinsichtlich ihrer Dicke kalibriert werden (Anspruch 16). Die gute Eignung beruht auf der zusammenhängenden Fläche an jeder Stelle des Bandes. Man kann zwei Bänder z. B. so anordnen, daß sie in Förderrichtung langsam konvergieren.

Infolge der großen Zugfestigkeit des Bandes kann auch ein langes Band mit nur einem angetriebenen Doppel-Kettenrad bewegt werden (Anspruch 17). Die Fachwände können elastisch nachgiebig an den Tragelementen befestigt sein, um ein Rütteln zu ermöglichen (Anspruch 18).

In der Zeichnung ist ein Ausführungsbeispiel der Erfindung dargestellt. Es zeigen :

Figur 1 in perspektivischer Darstellung ein Förderband, das einer Verpackungsmaschine und einer Kartoniermaschine zugeordnet ist,

Figur 2 eine Seitenansicht des Förderbandes nach Fig. 1 in stark schematisierter Seitenansicht,

Figur 3 eine Draufsicht auf ein Tragelement, das Bestandteil des Förderbandes ist,

Figur 4 eine Seitenansicht des Tragelementes in Richtung des Pfeiles IV in Fig. 3,

Figur 5 einen Querschnitt durch das Tragelement nach Linie V-V in Fig. 3,

Figur 6 eine Seitenansicht des Tragelementes in Richtung des Pfeiles VI in Fig. 3,

Figur 7 eine Unteransicht eines Teiles eines Förderbandes, wobei vier Tragelemente gezeigt sind,

Figur 8 eine teilweise Seitenansicht des Förderbandes im Bereich des Ablaufes von einem Kettenrad,

Figur 9 einen vertikalen Schnitt nach Linie IX-IX in Fig. 8,

Figur 10 einen horizontalen Schnitt durch das Förderband nach Linie X-X in Fig. 2,

Figur 11 einen Querschnitt durch das Förderband nach Linie XI-XI in Fig. 2,

Figur 12 einen vergrößerten Ausschnitt aus Fig. 2 im Bereich des strichpunktierten Kreises XII in Fig. 2,

Figur 13 einen vergrößerten Ausschnitt aus Fig. 2 im Bereich des strichpunktierten Kreises XIII in Fig. 2 und

Figur 14 einen vergrößerten Ausschnitt aus Fig. 2 im Bereich des strichpunktierten Kreises XIV in Fig. 2.

Das insgesamt mit F bezeichnete Förderband ist mindestens einer Verpackungsmaschine V und mindestens einer Kartonierstation K zugeordnet. Die Verpackungsmaschine V ist eine Schlauchbeutelmaschine, von der nur das untere Abgabeende 1 dargestellt ist. Die Kartonierstation ist auch nur schematisch dargestellt. Gezeigt ist ein Stapel 2 aus Kartonzuschnitten, eine Reihe von Kartons in verschiedenen Arbeitsphasen und Mittel 3 bis 7 zum Verschließen des Kartons. Weiter sind Bestandteile der Kartonierstation Schieber 8a bis 8d. Gegenstand der Erfindung ist das Förderband F, das nachfolgend anhand der weiteren Figuren näher betrachtet werden soll.

Gezeigt ist ein Förderband F, das aus zwei parallel angeordneten und synchron antreibbaren Teilbändern $F_1$ und $F_2$ zusammengesetzt ist. Zunächst soll eines der Teilbänder $F_1$, $F_2$ betrachtet werden; angenommen sei, daß das nachfolgend betrachtete Teilband das Band $F_1$ ist.

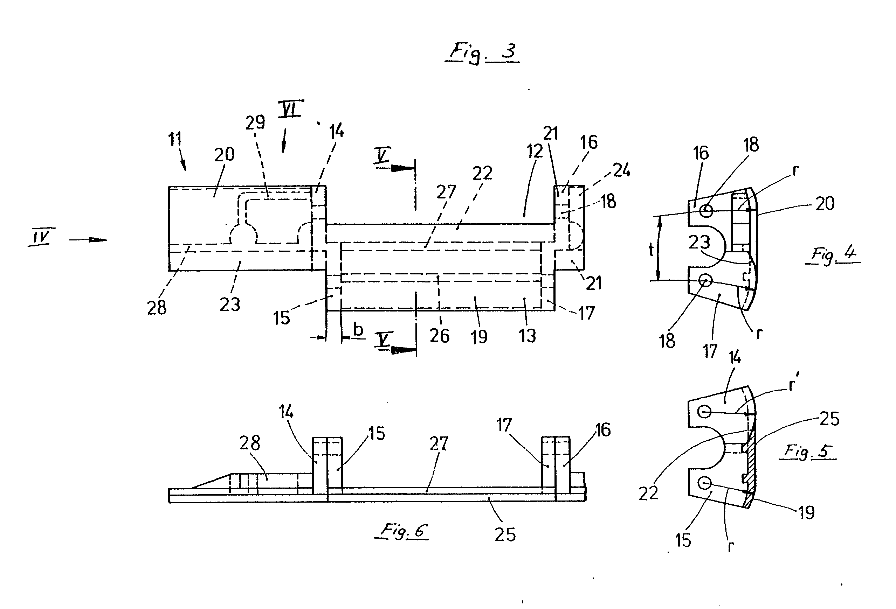

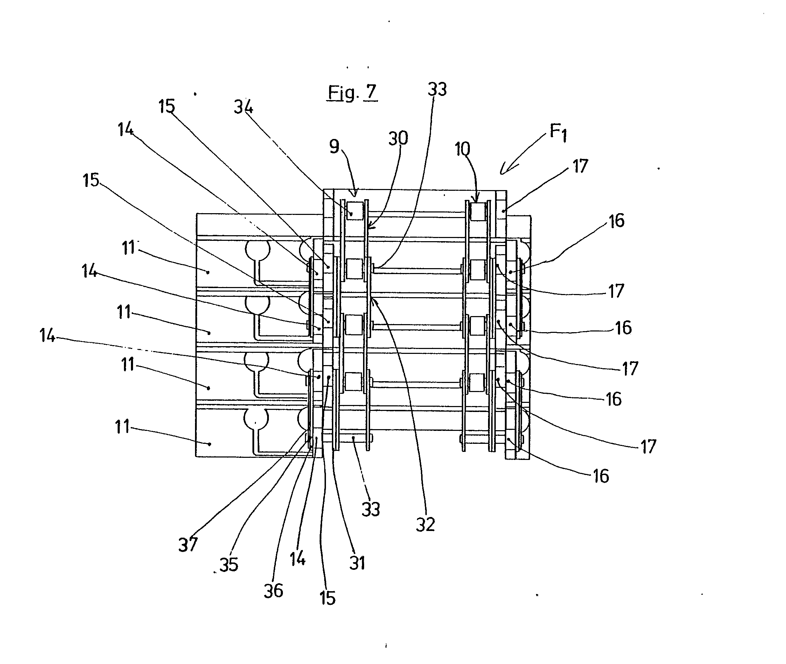

Fig. 7 zeigt, daß das Teilband $F_1$ aus zwei Ketten 9, 10 und mit den Ketten verbundenen Tragelementen 11 besteht. Ein Tragelement ist im Detail in den Fig. 3 bis 5 dargestellt.

Die Tragelemente 11 sind Kunststoff-Spritzteile, die z. B. aus Polycarbonat bestehen. Das Tragelement 11 hat einen Ausschnitt 12 und einen Vorsprung 13. Der Vorsprung 13 eines gleichen Elementes paßt in den Ausschnitt 12. Am Tragelement befinden sich insgesamt vier Füße 14 bis 17. Die Füße 15, 17 sind an den Vorsprung 13 angeformt und die Füße 14, 16 liegen seitlich des Ausschnittes 12. Jeder Fuß enthält eine Lagerbohrung 18. Die Füße 14/15 und 16/17 sind seitlich gegeneinander versetzt, und zwar um ein Maß, das gleich ihrer Breite b ist. Der Abstand t zwischen den Lagerbohrungen ist gleich der Gliedlänge der Ketten 9, 10 und beträgt z. B. 1 1/2″ (38,1 mm).

Am Tragelement 11 befindet sich eine Zylinderfläche 19, deren Krümmungsradius r sein Zentrum in den Zentren der Lagerbohrungen 18 der Füße 15, 17 hat. Weitere Zylinderflächen 20 und 21, die ebenfalls den Radius r haben, befinden sich an den Teilen des Tragelementes, die beiderseits des Ausschnittes 12 liegen. Diese Flächen sind konzentrisch zu den Lagerbohrungen 18 der Füße 14, 16.

Am Tragelement befinden sich ferner hohlzylindrische Flächen 22, 23 und 24, die ebenfalls konzentrisch zu Lagerbohrungen 18 sind. Die hohlzylindrische Fläche 23 ist konzentrisch zu den Lagerbohrungen der Füße 15, 17, während die hohlzylindrischen Flächen 23 und 24 konzentrisch zu den Lagerbohrungen 18 der Füße 14, 16 sind. Der Radius r′ der hohlzylindrischen Flächen ist ein wenig größer als der Radius r der zylindrischen Flächen. In die zylindrischen Flächen 19, 20, 21 geht eine ebene Tragfläche 25 tangential, also stufenlos, über.

An der Unterseite des Tragelementes befinden sich Versteifungsrippen, nämlich zwei Querrippen 26, 27 in dem Bereich, in dem sich auch der Vorsprung 13 befindet und Rippen 28, 29 in dem seitlichen Bereich, an dem sich der Fuß 14 befindet.

Bei zusammengefügten Tragelementen untergreift die zylindrische Fläche 19 die hohlzylindrische Fläche 22, während die zylindrischen Flächen 20, 21 die hohlzylindrischen Flächen 23, 24 eines benachbarten Tragelementes untergreifen. Die Radien r und $r_1$ sind so aufeinander abgestimmt, daß ein Spiel zwischen den Zylinderflächen besteht, das so groß ist, daß übermäßige Reibung vermieden wird bzw. eine Berührung überhaupt nicht vorhanden ist.

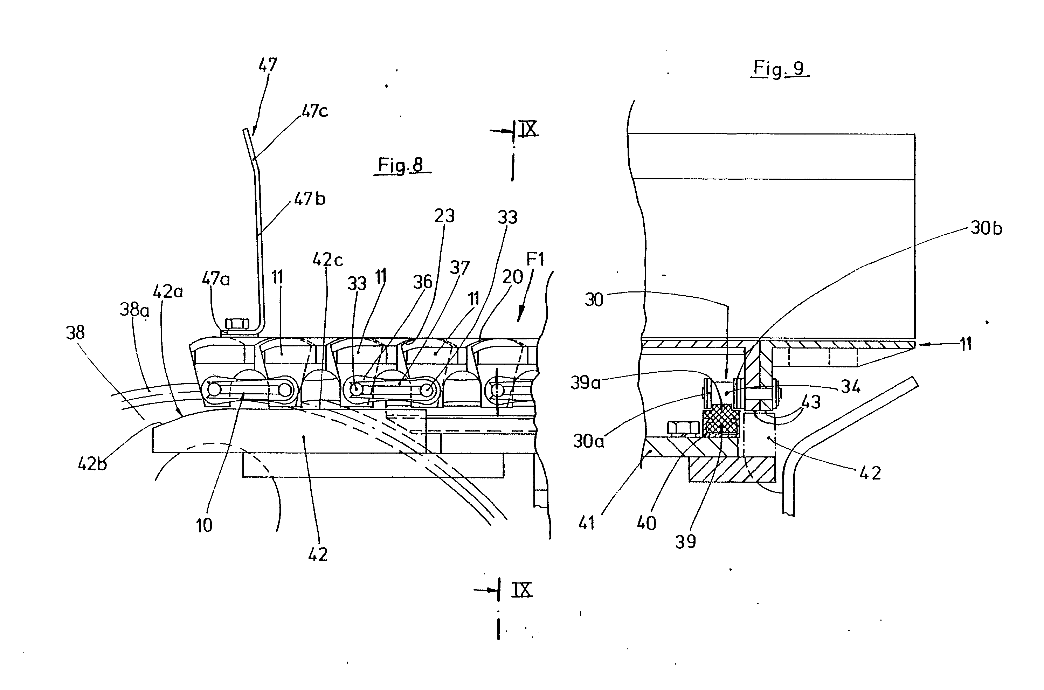

Die Tragelemente 11 werden durch die Ketten 9 und 10 miteinander verbunden. Dies soll nachfolgend anhand der Fig. 7 am Beispiel der Kette 9 beschrieben werden. Die Kette 9 ist ein Teil einer Duplexkette, von der nur eine Hälfte als Laufkette ausgenutzt wird, während die andere Hälfte zur Befestigung der Tragelemente 11 ausgenutzt wird. Die Kette 9 hat Innenglieder 30 und Außenglieder 32. Die Kettenglieder sind durch Gelenkbolzen 33 miteinander verbunden. Die Gelenkbolzen sind im Bereich der Innenglieder 30 von Rollen 34 umgeben; die Kette ist also eine Rollenkette. Die Gelenkbolzen 33 ragen seitlich von der Kette 9 ab und greifen in Lagerbohrungen 18 der Tragelemente 11 ein. Jeder Gelenkbolzen 33 durchgreift zwei Lagerbohrungen 18. Die Bolzen der Kette 9 durchgreifen jeweils gleichzeitig Füße 14 und 15 von aneinander anschließenden Tragelementen 11, während die Gelenkbolzen der Kette 10 jeweils die Füße 16, 17 benachbarter Tragelemente durchgreifen. Zwischen die Außenglieder 32 und die benachbarten Füße 15 bzw. 17 sind Blechlaschen 21 eingefügt. Die Gesamtdicke, die sich aus den Dicken der Füße 14, 15 und der Blechlasche 31 ergibt, ist gleich der Breite eines Innengliedes 30. An den äußeren Füßen 14 bzw. 16 liegen Kettenschlösser 35 an. Diese Kettenschlösser bestehen in bekannter Weise aus einer Lasche 36 und einer U-förmigen Feder 37. Die Seitenansichten dieser Elemente sind beispielsweise aus Fig. 8 ersichtlich. Die Federn 37 greifen in Ringnuten an den Gelenkbolzen 33 ein. Solche Kettenschlösser sind an sich bekannt.

Nachfolgend wird die Führung des Bandes anhand der Fig. 8 bis 11 erläutert.

In Fig. 8 ist ein Kettenrad 38 teilweise dargestellt. Das Kettenrad 38 hat eine Verzahnung 38a, die der Länge der Kettenglieder 30, 32 entspricht, so daß die Rollen 34 in Zahnlücken der Ketten eingreifen. Unmittelbar hinter dem Ablauf vom Kettenrad 38 befindet sich eine Führungsleiste 39 aus Kunststoff. Die Führungsleiste 39 hat einen Vorsprung 39a, der zwischen die seitlichen Laschen 30a, 30b des Innengliedes 30 paßt und so an der Rolle 34 anliegt. Die Kunststoffleiste 39 ist zu ihrer Versteifung in einem U-förmigen Versteifungsprofil 40 gefaßt.

Das Versteifungsprofil 40 ist an einer Platte 41 einer Tragkonstruktion befestigt. Führungsleisten 39 sind in geraden Abschnitten des Bandes angeordnet.

Die Fig. 8 und 9 zeigen auch eine Führungsleiste 42, die ein sofortiges Ablösen der Ketten 9, 10 vom Kettenrad 34 sicherstellt. Die Führungsleiste 42 hat eine Führungsfläche 42a, die mit den Endflächen 43 der Füße der Tragelemente 11 zusammenwirkt. Die Führungsleiste 42 hat einen Auflaufbereich 42b und einen daran anschließenden ebenen Bereich 42c, der parallel zu der Führungsleiste 39 verläuft. Aus der Betrachtung von Fig. 8 ist klar, daß ein Hängenbleiben der Kettenglieder im Kettenrad über den Kulminationspunkt des Kettenrades hinaus durch die Führungsleiste 42 verhindert wird. Selbstverständlich ist jeder der beiden Ketten 9, 10 eine solche Führungsleiste zugeordnet. Das Kettenrad 38 ist selbstverständlich ein Doppel-Kettenrad mit zwei Verzahnungen, nämlich einer Verzahnung für die Kette 9 und einer weiteren Verzahnung für die Kette 10.

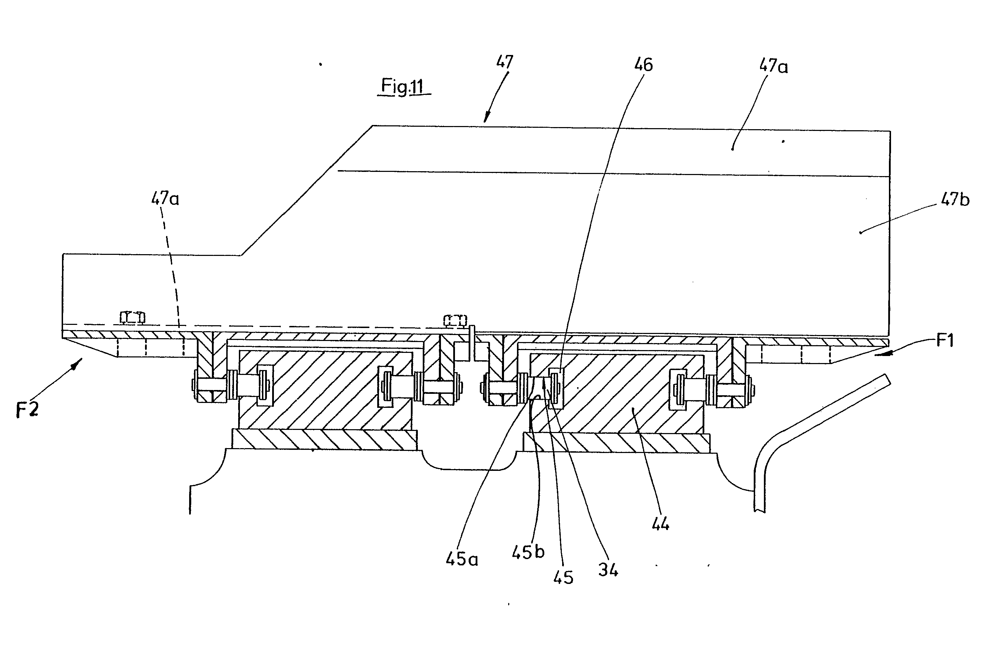

An ebenen Bahnstücken befinden sich Führungen gemäß den Fig. 8 und 9. Konvexe Bahnstücke können Kettenräder 38 aufweisen, während an konkaven Bahnstücken auf jeden Fall eine Kulissenführung gemäß Fig. 11 vorgesehen ist.

Fig. 11 zeigt ein Förderband, das aus zwei Teilbändern $F_1$ und $F_2$ zusammengesetzt ist. Die Kulissenführung wird am Beispiel des Teilbandes $F_1$ erläutert. Zur Führung dient ein Führungsstück 44, das entsprechend der gewünschten Bahnkrümmung gekrümmt ist. Fig. 11 zeigt einen Querschnitt durch das Führungsstück. Im Führungsstück befindet sich für jede Kette ein Führungsschlitz 45 (Kulisse). Der Führungsschlitz 45 ist durch zwei parallele Führungsflächen 45a und 45b begrenzt. Der Abstand der Führungsflächen 45a, 45b ist so, daß Rollen 34 der zugeordneten Kette mit geeignetem Spiel in den Schlitz 45 eingreifen können, d. h. ohne Verklemmung. Seitlich des Führungsschlitzes befindet sich eine Aussparung 46, in der sich die Kettenlaschen bewegen. Die Aussparung 46 ist so groß, daß ein Anstreifen der Kettenlaschen und der Enden der Kettenbolzen vermieden wird.

An jedem Teilband $F_1$, $F_2$ sind Fachwände 47 befestigt. Die Fachwände 47 haben die z. B. aus den Fig. 8 und 11 ersichtliche Form. Jede Fachwand hat einen unteren Befestigungsschenkel 47a, einen etwa rechtwinklig dazu stehenden Abschnitt 47b und einen gegenüber dem Abschnitt 47b leicht abgewinkelten Einführungsabschnitt 47c. Wie man aus Fig. 11 ersehen kann, erstreckt sich der Befestigungsabschnitt 47a nur über die Breite eines Teilbandes, während die Fachwand 47 insgesamt auch das benachbarte Teil (in Fig. 11 das Teilband $F_1$) übergreift.

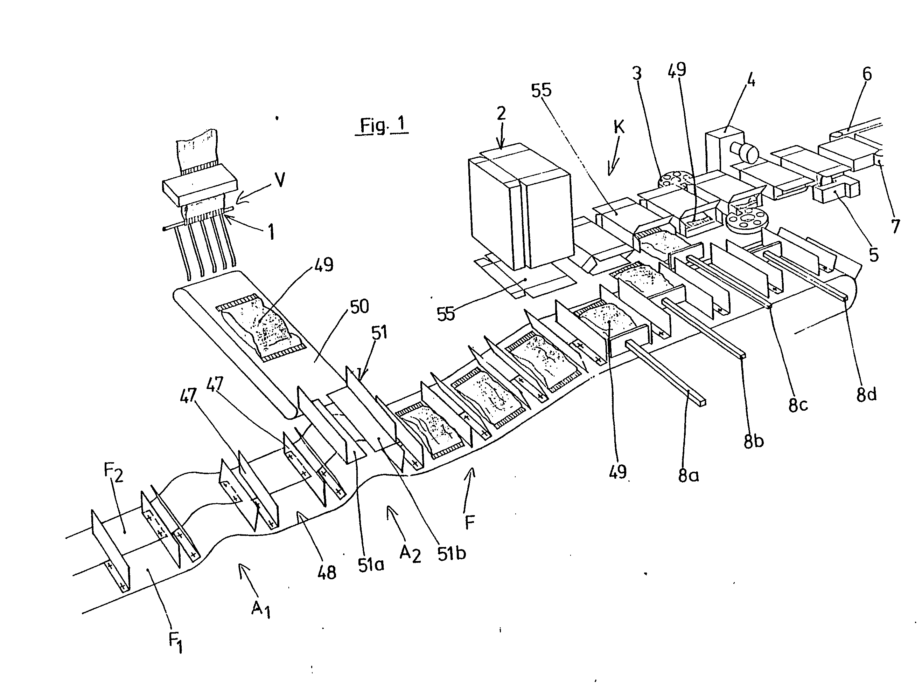

Eine Fachwand jedes Faches ist am Band $F_1$ und die andere am Band $F_2$ befestigt. Hierzu soll Fig. 1 betrachtet werden. Ein Fach ist in Fig. 1 insgesamt mit 48 bezeichnet. Die links befindliche Fachwand 47 ist am Teilband $F_1$ und die

weitere Fachwand 47 am Band $F_2$ befestigt. Aus Fig. 1 ist klar, daß durch Verschiebung der Bänder $F_1$ und $F_2$ gegeneinander die Breite sämtlicher Fächer 48 gleichzeitig geändert werden kann.

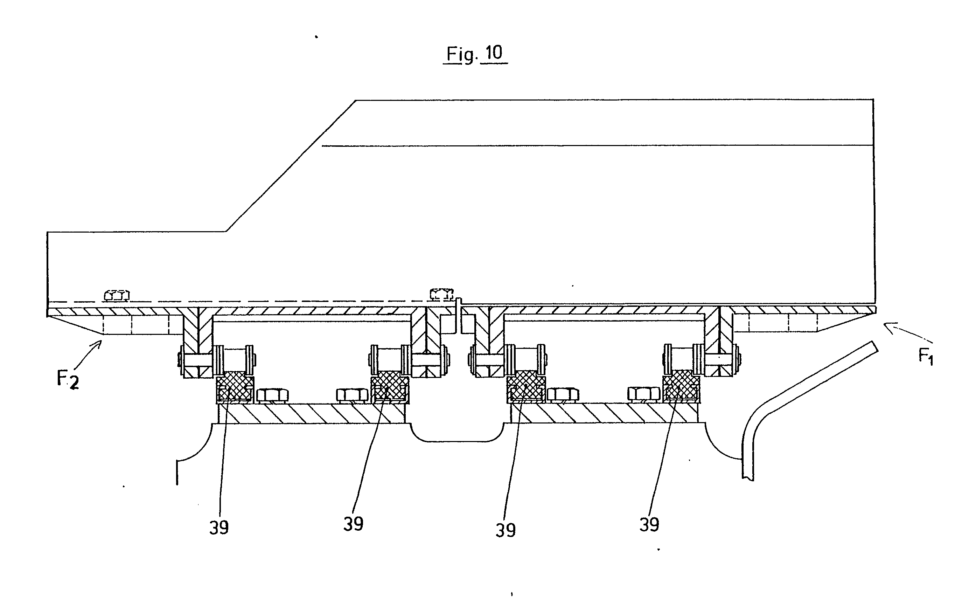

Fig. 10 zeigt wiederum einen Querschnitt durch beide Teilbänder $F_1$ im Bereich eines geraden Bahnabschnittes. In Fig. 10 ist auch die Führung zu sehen, die bereits anhand der Fig. 8 und 9 besprochen wurde und zwar für alle vier Ketten.

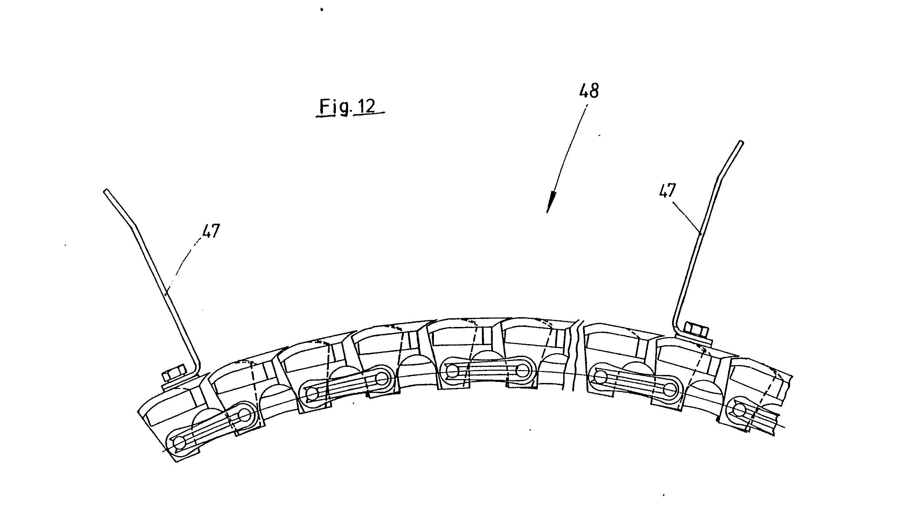

Fig. 12 zeigt, daß sich in konvexen Bahnabschnitten die Fächer 48 nach oben erweitern. Die Fachwände 47 verlaufen in etwa radial bezüglich des Krümmungsmittelpunktes des konvexen Bahnstückes. In dem konvexen Bahnstück kann das Band über ein Kettenrad gelegt sein, das nicht angetrieben zu sein braucht.

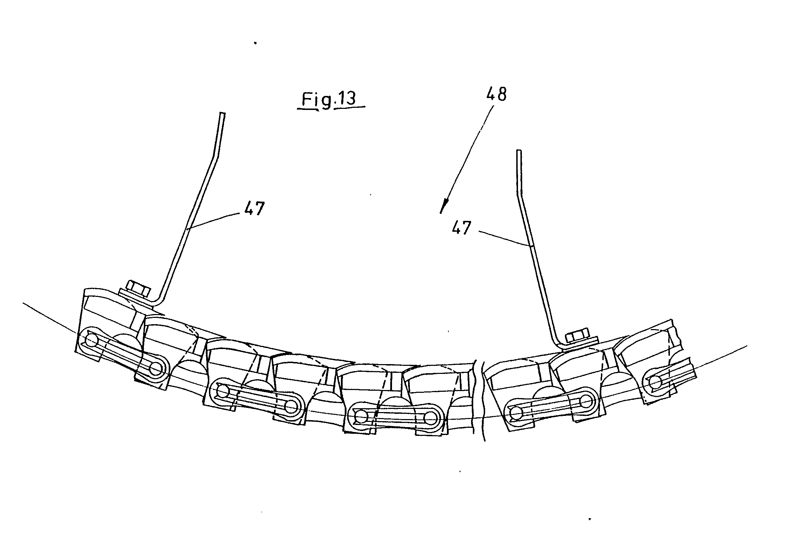

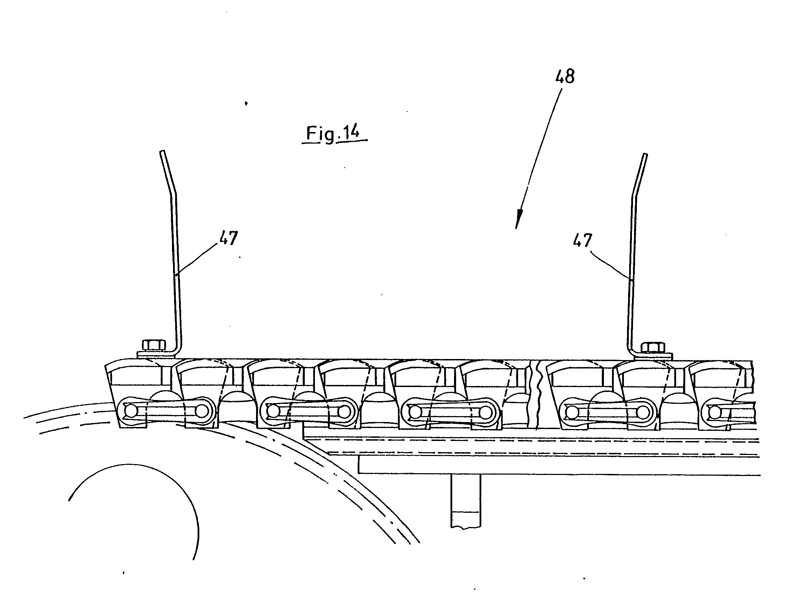

Fig. 13 zeigt, daß die Fächer 48 in konkaven Bahnstücken nach oben verengt sind. Auch hier verlaufen die Wände 47 in etwa radial zum Krümmungsmittelpunkt des konkaven Bahnstückes. Fig. 14 zeigt wieder ein gerades Bahnstück und entspricht der Darstellung nach. Fig. 9. Die Fächer 48 haben in diesem Fall etwa senkrechte Begrenzungswände. Die Wände 47 weichen zwar ein wenig nach oben divergierend von der exakt vertikalen Lage ab, jedoch sind auch Ausführungsformen möglich, bei denen die Wände 47 genau senkrecht stehen.

Mit dem Förderband wird wie folgt gearbeitet.

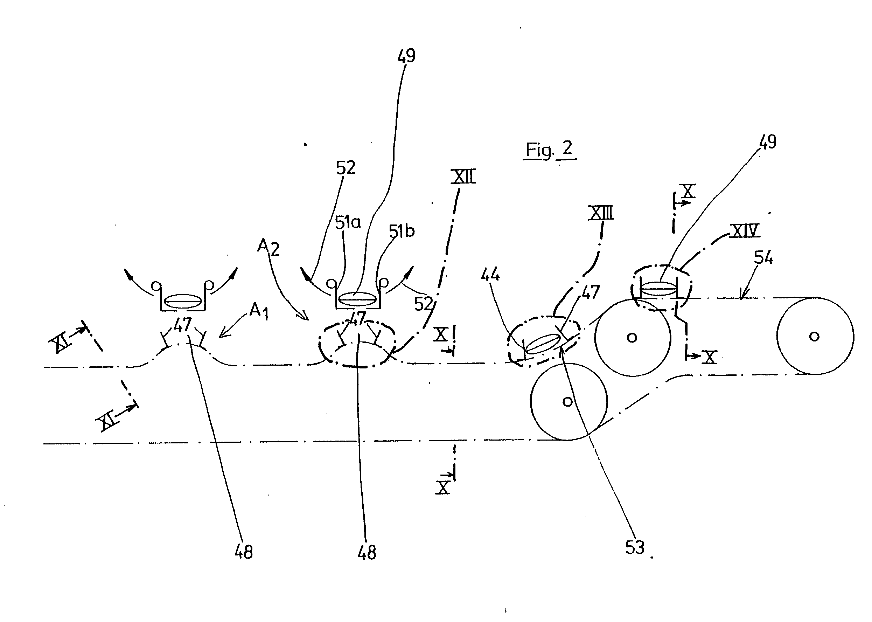

An Aufgabestellen $A_1$ und $A_2$ ist das Förderband konvex gewölbt. Wie bereits erläutert wurde, wird dadurch ein Auseinanderspreizen der Fachwände 47 erreicht (siehe auch Fig. 12). Dieses Aufspreizen der Fachwände 47 ist auch in den Fig. 1 und 2 dargestellt. Aus Verpackungsmaschinen V werden flexible Schlauchbeutel 49 zugeführt. Zu diesem Zweck ist an jeder Verpackungsmaschine 1 ein Zwischen-Förderband 50 angeordnet. Am Ende des Förderbandes befindet sich eine Haltevorrichtung 51 mit Halteblechen 51a und 51b. Der Schlauchbeutel 47 wird zunächst auf die Haltebleche 51a, 51b geleitet, die sich dann in Tragstellung befinden. Wenn der Beutel in ein Fach 48 fallen soll, werden die Halteblech 51a, 51b entsprechend den Pfeilen 52 nach außen geschwenkt, wonach der Verpackungsbeutel 49 der Schwerkraft folgend nach unten in ein Fach 48 fällt. Durch entsprechende Steuerungsmittel wird bewirkt, daß die Bleche 51a, 51b dann zur Seite geschwenkt werden, wenn sich ein Fach 48 unter der Haltevorrichtung 51 befindet. Der Beutel 49 kann auch im Falle seiner Deformation sicher aufgefangen werden, da in den Aufnahmestationen $A_1$, $A_2$ die Fächer nach oben erweitert sind.

In dem konkaven Bahnstück 53 nähern sich die Fachwände 47 aneinander an (vergleiche dazu auch Fig. 13). Dadurch wird der Beutel hinsichtlich seiner Breite und Lage kalibriert und gelangt schließlich in das gerade Bahnstück 54, in dessen Bereich das Einschieben des Beutels 49 in einen Karton erfolgt. Hierzu ist wieder Fig. 1 zu betrachten.

Vom Stapel 2 aus Kartonzuschnitten werden unten Kartonzuschnitte 55 nacheinander abgenommen und aufgefaltet. Wenn der Karton 55 vollständig aufgefaltet ist, bewirken die Schieber das Einschieben in den Karton. Die Schieber 8a bis 8d laufen synchron mit dem Förderband F um. Verschiedene Phasen des Einschiebens sind dargestellt. Wenn der Beutel 49 vollständig eingeschoben ist, bewirken die Schließvorrichtungen 3, 4, 5, 6 und 7 sukzessive das Verschließen des Kartons.

Durch das Zusammenwirken der zylindrichen Flächen 19, 20, 21 mit den hohlzylindrischen Flächen 22, 23, 24 wird jede Lückenbildung im Band auch auf den konkaven und konvexen Bandstrecken vermieden. Dadurch wird auch die Gefahr vermieden, daß die flexiblen Beutel 49 eingeklemmt werden. Die Erhaltung einer zusammenhängenden Auflagefläche in allen Bahnabschnitten ist am besten aus den Fig. 12 bis 14 erkennbar. Durch die Anordnung der Ketten 9, 10 und aller Führungseinrichtungen unterhalb der Tragelemente vermeidet man seitliche Führungsmittel, so daß das seitliche Abschieben in der Kartonierstation K reibungslos vor sich gehen kann.

**Patentansprüche**

1. Förderband (F), insbesondere für die Verwendung in Verpackungsanlagen, z. B. für die Förderung flexibler Beutel (49) in einer Kartoniermaschine (K), mit wenigstens zwei parallel angeordneten Zugelementen in Form von Rollenketten (9, 10) aus Stahl, die über Kettenräder (42) geführt sind und mit an den Ketten (9, 10) geführten Tragelementen (11), die ebene Auflageflächen (25) für zu fördernde Gegenstände (49) bilden, wobei jedes Tragelement (11) an zwei mit Kettengelenken (33) zusammenfallenden Gelenkachsen mit den Ketten (9, 10) verbunden ist und jede Gelenkachse (33) zugleich Gelenkachse für ein benachbartes Tragelement (11) ist und wobei benachbarte Tragelemente (11) einander überlappen und in den Überlappungsbereichen die untergreifenden Teile Zylinderflächen (19, 20, 21) aufweisen, deren Achse mit der den benachbarten Tragelementen gemeinsamen Gelenkachse zusammenfällt und die übergreifenden Teile (23, 23', 24) keinen oder nur einen geringen Abstand von der Zylinderfläche (20, 21, 22) haben und wobei die ebenen Auflageflächen (25) stufenlos an die Zylinderflächen (20, 21, 22) anschließen, dadurch gekennzeichnet, daß die Ketten (9, 10) unterhalb der Tragelemente (11) und innerhalb der Seitenkanten derselben angeordnet sind, und daß parallel zu dem Förderband (F$_1$) ein weiteres Förderband (F$_2$) vorgesehen ist, wobei die benachbarten Seitenkanten der Förderbänder (F$_1$, F$_2$) nahe beieinanderliegen und an jedem Förderband (F$_1$, F$_2$) Fachwände (47) angeordnet sind, die auch das benachbarte Förderband übergreifen und zwei Fachwände (47), von denen eine an einem Förderband (F$_1$) und die andere am anderen Förderband (F$_2$) befestigt ist, ein Fach (48) bidlen und zur Verstellung der Fachbreite die Teilbänder (F$_1$, F$_2$) relativ zueinander verstellbar sind.

2. Förderband nach Anspruch 1, dadurch gekennzeichnet, daß auf die Enden der seitlich abragenden Ketten-Gelenkbolzen (33) Kettenschlösser (35) aufgesteckt sind.

3. Förderband nach Anspruch 2, dadurch gekennzeichnet, daß jedes Kettenschloß (35) in an sich bekannter Weise aus einer Verbindungslasche (36) und einer U-förmigen Feder (37) besteht, die in Ringnuten an den Enden der Ketten-Gelenkbolzen (33) eingreift.

4. Förderband nach einem der vorhergehenden Ansprüche, dadurch gekennzeichnet, daß jede Kette (9, 10) ein Teil einer Duplexkette ist, wobei die Einspannbreite der Tragelemente (11) gleich der Breite eines Ketten-Innengliedes (30) ist.

5. Förderband nach einem der vorhergehenden Ansprüche, dadurch gekennzeichnet, daß die Tragelemente (11) an den Außenseiten der Ketten (9, 10) befestigt sind.

6. Förderband nach einem der vorhergehenden Ansprüche, dadurch gekennzeichnet, daß die Tragelemente (11) von ihrer Unterseite abragende Füße (14 bis 17) aufweisen, in denen sich Bohrungen (18) für den Durchgriff von die Tragelemente (11) verbindenden Bolzen (33) befinden.

7. Förderband nach einem der vorhergehenden Ansprüche, dadurch gekennzeichnet, daß jedes Tragelement (11) mindestens einen Ausschnitt (12) und einen Vorsprung (13) aufweist, wobei der Vorsprung (13) eines gleich ausgebildeten Tragelementes (11) in den Einschnitt (12) paßt und in dem so zusammengefügten Zustand Füße (14 bis 17) für die Einführung von Gelenkbolzen (33) nebeneinander liegen.

8. Förderband nach einem der vorhergehenden Ansprüche, dadurch gekennzeichnet, daß die übergreifenden Teile an den Überlappungsstellen hohlzylindrische Flächen (23, 23', 24) sind.

9. Förderband nach einem der vorhergehenden Ansprüche, dadurch gekennzeichnet, daß die Tragelemente (11) Kunststoff-Spritzteile sind und vorzugsweise aus Polycarbonat bestehen.

10. Förderband nach einem der vorhergehenden Ansprüche, gekennzeichnet durch Führungsleisten (39) für die Auflage der Ketten (9, 10), die vorzugsweise aus Kunststoff bestehen, wobei der Kunststoff vorzugsweise in einem Metallprofil (40) gefaßt ist.

11. Förderband nach Anspruch 10, dadurch gekennzeichnet, daß die Führungsleisten (39) zwischen die Innenglieder (30) der Kette eingreifen und eine Auflagefläche für die Kettenrollen (34) aufweisen.

12. Förderband nach einem der vorhergehenden Ansprüche, gekennzeichnet durch vorzugsweise in konkaven (53) und vertikalen Bahnabschnitten angeordnete Führungskulissen (34) für die Ketten (9, 10), wobei jede Führungskulisse (45) zwei zueinander parallele Flächen (45a, 45b) aufweist, zwischen die die Kettenrollen (34) mit geringem Spiel passen.

13. Förderband nach einem der vorhergehenden Ansprüche, gekennzeichnet durch Führungsflächen (42a) an den Ablaufstellen der Kettenräder (38), die mit Führungsflächen (43) an den Tragelementen zusammenwirken, vorzugsweise mit den Endflächen von Füßen (14 bis 17), durch die die Gelenkbolzen (33) hindurchgesteckt sind.

14. Förderband nach einem der vorhergehenden Ansprüche, dadurch gekennzeichnet, daß an Beschickungsstationen (A₁, A₂), in denen Fördergut (49) auf das Förderband (F) aufgegeben wird, eine konvexe Bahnstrecke angeordnet ist, wobei die Konvexität so gewählt ist, daß zwei benachbarte, ein Fach (48) begrenzende Fachwände (47) in eine nach oben divergierende Lage gebracht werden.

15. Förderband nach einem der vorhergehenden Ansprüche, dadurch gekennzeichnet, daß zwischen einer Beschikungsstation (A₁, A₂), in der Fördergut (49) auf das Förderband (F) aufgegeben wird und einer Abgabestation (K), in der Fördergut (49) abgeschoben wird, eine konkave Bahnstrecke (53) angeordnet ist, wobei die Konkavität so gewählt ist, daß zwei benachbarte, ein Fach (48) begrenzende Fachwände (47) in eine nach oben konvergierende Lage gebracht werden.

16. Förderband nach einem der vorhergehenden Ansprüche, gekennzeichnet durch ein Unterband und ein Oberband, die in einem solchen Abstand angeordnet sind, daß sie zwischen den Bändern befindliches Fördergut, z. B. flexible Verpakkungsbeutel mit Füllung, formen können.

17. Förderband nach einem der vorhergehenden Ansprüche, dadurch gekennzeichnet, daß jedem Teilband (F₁, F₂) nur ein angetriebenes Doppel-Kettenrad zugeordnet ist.

18. Förderband nach einem der vorhergehenden Ansprüche, dadurch gekennzeichnet, daß die Fachwände (47) elastisch nachgiebig an den Tragelementen (11) befestigt sind.

## Claims

1. A conveyor belt, more particularly for use in packaging installations, e. g. for conveying flexible bags (49) in a cartoning machine (K), having at least two parallel traction elements in the form of roller chains (9, 10) made of steel, which are guided over chain wheels (42), and having support elements (11) which are guided on the chains (9, 10) and which form flat bearing surfaces (25) for the objects (49) which are to be conveyed, each support element (11) being connected to the chains (9, 10) at two joint axes (33) which coincide with the chain joints, and each joint axis (33) is at the same time a joint axis for an adjacent support element (11), adjacent support elements (11) overlapping one another and the underlying parts comprising cylindrical surfaces (19, 20, 21) in the overlapping regions, the axes of which cylindrical surfaces coincide with the common joint axis of the adjacent support members, and there is no or only a slight clearance between the overlapping parts (23, 23', 24) and the cylindrical surface (20, 21, 22), the flat bearing surfaces (25) adjoining the cylindrical surfaces (20, 21, 22) in a non-stepped manner, characterised in that the chains (9, 10) are arranged beneath the support elements (11) and within the lateral edges of the latter, and a further conveyor belt (F₂) is provided parallel to the conveyor belt (F₁), the adjacent lateral edges of the conveyor belts (F₁, F₂) being arranged close together, and compartment walls (47), which also overlap the adjacent conveyor belt, being arranged on each conveyor belt (F₁, F₂), and two compartment walls (47), one of which is secured to one conveyor belt (F₁) and the other to the other conveyor belt (F₂), form a compartment (48) and are adjustable relative to one another for the adjusting the width of the compartments of the partial conveyor belts (F₁, F₂).

2. A conveyor belt according to claim 1, characterised in that chain connectors (35) are arranged on the ends of the laterally projecting chain joint pins (33).

3. A conveyor belt according to claim 2, characterised in that each chain connector (35) comprises, in known manner, a connection plate (36) and a U-shaped spring (37), which engages in annular grooves at the ends of the chain joint pins (33).

4. A conveyor belt according to any one of the preceding claims, characterised in that each chain (9, 10) is part of a duplex chain, the span of the support elements (11) being equal to the width of an inner chain link (30).

5. A conveyor belt according to any one of the preceding claims, characterised in that the support elements (11) are secured at the outsides of the chains (9, 10).

6. A conveyor belt according to any one of the preceding claims, characterised in that the support element (11) comprise bases (14 to 17) projecting from the underside thereof, which bases comprise bores (18), which are penetrated by the pins (33) which connect the support elements (11).

7. A conveyor belt according to any one of the preceding claims, characterised in that each support element (11) comprises at least one cut-away portion (12) and one projection (13), the projection (13) of a similarly formed support element (11) fitting into the recess (12), and in the thus assembled state, bases (14 to 17) for the introduction of joint pins (33) are disposed adjacent to one another.

8. A conveyor belt according to any one of the preceding claims, characterised in that the overlapping parts are hollow cylindrical surfaces (23, 23', 24) in the overlapping regions.

9. A conveyor belt according to any one of the preceding claims, characterised in that the support elements (11) are plastics material injection- moulded parts and are preferably made from polycarbonate.

10. A conveyor belt according to any one of the preceding claims, characterised by guide rails (39) for supporting the chains (9, 10), which are preferably made from plastics material, the plastics material preferably being contained within a metal section (40).

11. A conveyor belt according to claim 10, characterised in that the guide rails (39) engage between the inside links (30) of the chain and comprise a bearing surface for the chain rollers (34).

12. A conveyor belt according to any one of the preceding claims, characterised by guideways (34)* for the chains (9, 10) preferably arranged in concave (53) and vertical track sections, each guideway (45) comprising two parallel surfaces (45a, 45b), between which the chain rollers (34) fit with a slight clearance.

13. A conveyor belt according to any one of the preceding claims, characterised by guide surfaces (42a) at the release points of the chain wheels (38), which guide surfaces (42a) cooperate with guide surfaces (43) on the support elements, preferably with the end faces of bases (14 to 17), through which the joint pins (33) are passed.

14. A conveyor belt according to any one of the preceding claims, characterised in that a convex track section is arranged at loading stations $(A_1, A_2)$, where the conveyed goods (49) are supplied to the conveyor belt (F), the convexity of the said track section being selected such that two adjacent compartment walls (47), which define a compartment (48), are brought into a position diverging upwards.

15. A conveyor belt according to any one of the preceding claims, characterised in that a convex track section (53) is arranged between a loading station $(A_1, A_2)$, where the goods to be transported (49) are supplied to the conveyor belt (F), and a delivery station (K), where the conveyed goods (49) are pushed off, the convexity of the said track section being selected such taht two adjacent compartment walls (47), which define a compartment (48), are brought into a position converging upwards.

16. A conveyor belt according to any one of the preceding claims, characterised by one lower belt and one upper belt, which are arranged at a distance, such that they are capable of shaping goods arranged between the belts, e. g. flexible packaging bags with contents.

17. A conveyor belt according to any one of the preceding claims, characterised in that only one driven double chain wheel is associated with each partial belt $(F_1, F_2)$.

18. A conveyor belt according to any one of the preceding claims, characterised in that the compartment walls (47) are secured to the support elements (11) so as to be elastically flexible.

* should presumably read « (45) ».

Revendications

1. Bande transporteuse (F), en particulier pour installations d'emballage, par exemple pour le transport de sacs flexibles (49) dans une machine à mettre en cartons (K), comportant au moins deux éléments tracteurs placés parallèlement formés de chaînes à rouleaux (9, 10) en acier qui passent sur des roues à chaîne (38) ; des éléments porteurs (11) montés sur ces chaînes (9, 10) et qui forment des surfaces d'appui planes (25) pour les objets à transporter (49), chaque élément porteur (11) étant relié aux chaînes (9, 10) par deux axes d'articulation coïncidant avec des articulations (33) des chaînes, chaque axe d'articulation (33) étant en même temps un axe d'articulation pour un élément porteur (11) voisin, les éléments porteurs (11) voisins se chevauchant et, dans les zones de chevauchement, les parties coiffées présentant des surfaces cylindriques (19, 20, 21) dont l'axe coïncide avec l'axe d'articulation commun aux éléments porteurs voisins et les parties coiffantes (22, 23, 24) étant appliquées contre la surface cylindrique (20, 21, 22) ou à une faible distance d'elle, alors que lesdites surfaces d'appui planes (25) se raccordent tangentiellement aux surfaces cylindriques (20, 21, 2) caractérisée en ce que les chaînes (9, 10) sont placées sous les éléments porteurs (11) et à l'intérieur des bords latéraux de ceux-ci, et en ce que, parallèlement à la bande transporteuse $(F_1)$, est prévue une autre bande transporteuse $(F_2)$, les bords latéraux voisins de ces bandes transporteuses $(F_1, F_2)$ étant placés très près l'un de l'autre, des parois de compartiments (47) étant montées sur chaque bande transporteuse $(F_1, F_2)$ et s'étendant aussi sur la bande transporteuse voisine, deux parois de compartiment (47) dont l'une est fixée à une bande $(F_1)$ et l'autre fixée à l'autre bande $(F_2)$ formant un compartiment (48), et les bandes partielles $(F_1, F_2)$ pouvant être déplacées l'une par rapport à l'autre pour le réglage de la largeur des compartiments.

2. Bande transporteuse selon la revendication 1, caractérisée par le fait que des raccords de chaîne (35) sont montés sur les extrémités des axes d'articulation de chaîne débordant latéralement (33).

3. Bande transporteuse selon la revendication 2, caractérisée par le fait que chaque raccord de chaîne (35) est constitué de façon connue en soi d'une plaque de jonction (36) et d'un ressort en U (37) qui s'engage dans des gorges annulaires prévues à l'extrémité des axes d'articulation de chaîne (33).

4. Bande transporteuse selon l'une des revendications précédentes, caractérisée par le fait que chaque chaîne (9, 10) est une partie d'une chaîne double, la largeur de serrage des éléments porteurs (11) étant égale à la largeur d'un maillon intérieur de chaîne (30).

5. Bande transporteuse selon l'une des revendications précédentes, caractérisée par le fait que les éléments porteurs (11) sont fixés aux côtés extérieurs des chaînes (9, 10).

6. Bande transporteuse selon l'une des revendications précédentes, caractérisée par le fait que les éléments porteurs (11) présentent des pieds (14 à 17) saillant du dessous d'eux et présentant des trous (18) pour le passage d'axes (33) réunissant les éléments porteurs (11).

7. Bande transporteuse selon l'une des revendications précédentes, caractérisée par le fait que chaque élément porteur (11) présente au moins une échancrure (12) et une saillie (13), la saillie (13) d'un élément porteur (11) identique s'ajustant dans l'échancrure (12) et, à l'état ainsi assemblé, les pieds (14 à 17) étant juxtaposés pour l'introduction d'axes d'articulation (33).

8. Bande transporteuse selon l'une des revendications précédentes, caractérisée par le fait que les parties coiffantes, aux endroits de chevauchement, sont des surfaces cylindriques creuses (22, 23, 24).

9. Bande transporteuse selon l'une des revendications précédentes, caractérisée par le fait que les éléments porteurs (11) sont des pièces injectées en matière plastique, de préférence en polycarbonate.

10. Bande transporteuse selon l'une des revendications précédentes, caractérisée par des barres de guidage (39) pour l'appui des chaînes (9, 10), ces barres étant de préférence en matière plastique et de préférence enchassées dans un profilé métallique (40).

11. Bande transporteuse selon la revendication 10, caractérisée par le fait que les barres de guidage (39) s'engagent dans les maillons intérieurs (30) des chaînes et présentent une surface d'appui pour les rouleaux de chaîne (34).

12. Bande transporteuse selon l'une des revendications précédentes, caractérisée par des coulisses de guidage de chaîne (45) placées de préférence dans des tronçons concaves (53) et des tronçons verticaux, chaque coulisse de guidage (45) présentant deux surfaces parallèles (45a, 45b) entre lesquelles les rouleaux de chaîne (34) s'ajustent avec un faible jeu.

13. Bande transporteuse selon l'une des revendications précédentes, caractérisée par des surfaces de guidage (42a) situées aux endroits de sortie des roues à chaîne (38) et coopérant avec des surfaces de guidage (43) prévues sur les éléments porteurs, de préférence avec les surfaces d'extrémité de pieds (14 à 17) traversés par les axes d'articulation (33).

14. Bande transporteuse selon l'une des revendications précédentes, caractérisée par le fait qu'aux postes de chargement ($A_1$, $A_2$) où la matière transportée (49) est chargée sur la bande transporteuse (F) est placé un tronçon convexe dont la convexité est choisie de façon que deux parois (47) voisines limitant un compartiment (48) soient mises dans une position où elles divergent vers le haut.

15. Bande transporteuse selon l'une des revendications précédentes, caractérisée par le fait qu'entre un poste de chargement ($A_1$, $A_2$) où la matière transportée (49) est chargée sur la bande transporteuse (F) et un poste de sortie (K) où la matière transportée est déchargée est placé un tronçon concave (53) dont la concavité est choisie de façon que deux parois (47) voisines limitant un compartiment (48) soient mises dans une position où elles convergent vers le haut.

16. Bande transporteuse selon l'une des revendications précédentes, caractérisée par une bande inférieure et une bande supérieure placées à une distance telle qu'elles puissent mettre en forme la matière transportée, par exemple des sacs d'emballage flexibles remplis, se trouvant entre elles.

17. Bande transporteuse selon l'une des revendications précédentes, caractérisée par le fait qu'à chaque bande partielle ($F_1$, $F_2$) est adjointe une seule roue dentée double entraînée.

18. Bande transporteuse selon l'une des revendications précédentes, caractérisée par le fait que les parois de compartiments (47) sont fixées aux éléments porteurs (11) de façon à céder élastiquement.

Fig. 1

Fig. 2

0 105 954

Fig. 3

Fig. 4

Fig. 5

Fig. 6

Fig. 7

0 105 954

Fig. 9

Fig. 8

47
47c
47b
47a
42c
42a
11
38a
38
42b
10
42
23
33
11
36
37
33
11
20
11
F1
IX
IX

30b
30
11
39a
30a
34
43
42
41
40
39

Fig. 10

Fig.11

0 105 954

Fig. 12

Fig.13

48

47

47

0 105 954

Fig.14